# EUROPEAN PATENT SPECIFICATION

(11) **EP 0 549 224 B1**
(45) Date of publication and mention of the grant of the patent: **06.09.2000**
(21) Application number: 92311387.2
(22) Date of filing: 14.12.1992
(51) Int. Cl.: C04B 35/80, C04B 35/58

(54) **Ceramic matrix composites and method for making same**
Verbundwerkstoffe mit keramischer Matrix und Verfahren zu ihrer Herstellung
Composites à matrice céramique et leur procédé de fabrication

(30) Priority: 20.12.1991 US 811278; 20.12.1991 US 811285
(43) Date of publication of application: 30.06.1993
(73) Proprietor: DOW CORNING CORPORATION, Midland Michigan 48686-0994 (US)
(72) Inventor: Petrak, Daniel Ralph, Midland, Michigan (US); Zank, Gregg Alan, Midland, Michigan (US); Stark, Gary Lee, Midland, Michigan (US)
(74) Representative: Hall, Marina

(56) References cited:
- DE-A- 4 016 052
- US-A- 4 889 686
- US-A- 5 067 999

## Description

The present invention relates to a method for making novel ceramic matrix composites and to novel ceramic matrix composites which comprise coated refractory fibers within ceramic matrices derived from curable preceramic polymers. These composites can be formed into complex shapes which have good oxidation resistance at high temperatures, high strength and toughness and a wide range of dielectric properties.

Ceramic matrix composites and numerous methods for their production are well known in the art. For instance, several recent review articles such as that of Mah et al., Ceramic Bulletin, Vol. 66, No. 2 (1987) and that of Schioler et al., Ceramic Bulletin, Vol. 65, No. 2 (1986), describe the matrices, fibers, processing and characterization of various composites. Techniques described therein include hot-pressing various glass or glass-ceramic precursors into fibrous phases as well as the use of chemical vapor infiltration to impregnate fibrous phases with volatile, ceramic precursors. Such composites and methods, however, differ from those described herein.

Chi et al. in U.S. Patent Nos. 4,460,639 and 4,460,640 and Haluska in U.S. Patent No. 4,460,630 also describe ceramic matrix composites and their methods of manufacture. It is taught therein that organosilsesquioxanes, organopolysiloxanes and polysilazanes, respectively, can be used as matrix precursors in a polymer infiltration process. The fiber used to manufacture such composites, however, do not have the coating described herein and, thus, the properties of the composites are significantly different.

Boisvert et al., Ceram. Eng. Sci. Proc., 9 pp. 873-880 (1988), likewise describe the use of polyvinylsilane in a polymer infiltration process for producing ceramic composites. This reference, however, is limited to the use of carbon coated fibers in matrices derived from polyvinylsilane.

US-A-4642271 discloses a ceramic fibre composite comprising a plurality of ceramic fibres, a fibre coating of boron nitride disposed over each fibre to form a plurality of coated fibres and a ceramic matrix encapsulating said plurality of coated fibres. The fibres are selected from silicon carbide, alumina and graphite fibres whilst the ceramic matrix is selected from SiO₂, SiC, ZrO₂, ZrO₂-TiO₂, cordierite, mullite and coated carbon matrices. Examples of suitable matrices include silicon carbide based matrices derived from the pyrolysis of a polysilane polymer matrix together with ceramic filler.

DE 40 16 052 A1 relates to a hot gas tube consisting of ceramic fiber composite materials. The molded part of the tube consists of a ceramic composite comprising a ceramic matrix of a preceramic Si polymer and inorganic, oxidation resistant fibers embedded in the matrix. Examples of suitable fibers include SiO₂ and SiC but there is no disclosure of the use of coated fibers.

The present inventors have unexpectedly found that composites with properties superior to those known in the art can be formed by incorporating coated refractory fibers into a matrix which is derived from specific preceramic polymers.

The present invention relates to novel ceramic matrix composites which comprise coated refractory fibers within ceramic matrices. The novelty of the invention resides in the fact that the fibers have interfacial coatings of boron nitride on them and the matrices are produced by the ceramification of curable preceramic polymers selected from polysiloxanes and polysilazanes.

The present invention also relates to a method of making fiber reinforced ceramic matrix composites. The method comprises impregnating boron nitride coated fibers with a matrix mixture comprising a curable preceramic polymer selected from polysiloxanes and polysilazanes and, optionally, ceramic fillers. The impregnated fibers are next formed into the desired shape and cured to form a molded part. The molded part is then heated to a temperature of at least 1000°C. in an inert atmosphere for a time effective to convert the preceramic polymer to a ceramic. If desired, composites derived in the above manner can be reimpregnated with the polymer solution to decrease the open porosity.

The present invention is based on the discovery that novel ceramic matrix composites may be formed using fibers having interfacial coatings thereon within matrices derived from curable preceramic polymers selected from polysiloxanes and polysilazanes and wherein the coating is boron nitride. These composites have excellent strength and toughness and many retain these properties at elevated temperatures in air.

According to one aspect of the invention there is provided an high strength, oxidation resistant ceramic fiber composite having a flexural strength exceeding 206.8 MPa (30 ksi) after oxidation in air at a temperature of 1100°C and comprising coated refractory fibers embedded in a ceramic matrix, characterised in that the ceramic matrix in which the coated fibers are embedded is a cured and ceramified silicon-containing polymer material selected from polysiloxanes and polysilazanes said polymer material optionally containing other atoms than silicon selected from titanium and zirconium and wherein the fibers are coated with boron nitride.

According to another aspect of the invention there is provided a method of forming a ceramic fiber composite as just defined and comprising coated refractory fibers embedded in a ceramic matrix, wherein:
(i) said fibres coated with boron nitride are impregnated with a curable preceramic silicon-containing polymer material selected from polysiloxanes and polysilazanes, to form a curable preceramic matrix mixture of said fibres and said polymer material, said polymer material (A) optionally containing other atoms than silicon selected from titanium and zirconium;
(ii) the resulting pre-preg mixture of fibres impregnated with said polymer material is formed into a desired shape;
(iii) the shaped pre-preg mixture is cured under temperature conditions resulting in cross-linking of said polymer material without ceramification thereof; and
(iv) the pressed and cured pre-preg mixture is heated to ceramification at a temperature of at least 1,000°C in an inert atmosphere or a vacuum.

The refractory fibers which may be used in this invention comprise any high-modulus fibers which are compatible with the interfacial coatings and matrices described herein and which can withstand the polymer infiltration processing. These fibers are well known in the art and many are commercially available. Examples of suitable fibers include those of silicon carbide, silicon nitride, silicon carbide deposited on a carbon core, aluminum borate, aluminum oxide, silicon oxide, silicon carbide containing titanium, silicon oxycarbides, silicon oxycarbonitrides, carbon and the like. Generally, such fibers should have a modulus greater than 100 GPa, preferably greater than 150 GPa. These fibers may contain any desirable number of filaments per tow and have a size in the range of 5 micrometers to 500 micrometers.

Examples of specific fibers include silicon carbide fibers with a diameter in the range of 10-20 micrometers manufactured by Nippon Carbon and sold under the trade name "Nicalon"; fibers comprising silicon carbide deposited on a carbon core with a diameter of 143 micrometers manufactured by Avco and designated "SCS-6"; alumina-boriasilica fibers with a diameter of 10-12 micrometers manufactured by 3M and sold under the tradenames "Nextel 312", "Nextel 440" and "Nextel 480"; Al₂0₃ fibers with a diameter of 20 micrometers manufactured by Du Pont under the designation "FP"; SiO₂ fibers with a diameter of 8-10 micrometers manufactured by J. P. Stevens; Al₂0₃-SiO₂ fibers with a diameter in the range of 9-17 micrometers manufactured by Sumitomo; silicon carbide fibers containing titanium with a diameter in the range of 8-10 micrometers manufactured by Ube and sold under the tradename "Tyranno"; silicon carbide fiber with a diameter in the range of about 6-10 micrometers manufactured by Avco; silicon oxycarbonitride fibers with a diameter in the range of about 10-15 micrometers manufactured by Dow Corning designated "MPDZ" and "HPZ"; silicon carbide fibers with a diameter in the range of about 10-15 micrometers manufactured by Dow Corning designated "MPS"; silicon nitride fibers such as those produced by Tonen or Rhone Poulanc and A12O3-ZrO2 fibers with a diameter of about 20 micrometers manufactured by Du Pont and Designated "PRD-166".

Although any of the above fibers are functional, those preferred herein comprise ceramic fibers of silicon, carbon, nitrogen and/or oxygen. Especially preferred are "Nicalon" silicon oxycarbide fibers and "HPZ" silicon oxycarbonitride fibers derived from hydridopolysilazane polymer.

The above fibers of this invention are provided with a coating to toughen the composite by preventing bonding and chemical reactions between the fibers and the matrix. This allows the fibers to debond and pullout under stress such that the composite does not undergo catastrophic failure as demonstrated by ceramic monoliths. The coating is of boron nitride. Such a coating and methods for its deposition are well known in the art. For instance, Rice in US Patent 4,642,271 describe the chemical vapor deposition of boron nitride on fibers.

Additionally, it is noted that certain fibers, when heated in the matrix, form in-situ interfacial layers such as boron nitride which may serve the same purpose as described above.

The coating of the invention is generally used in thicknesses which allow the fibers to debond and pullout under stress. Although the thickness is dependent on coating quality, typical thicknesses are generally in the range of about 0.05 to about 1.0 micron.

The present inventors have discovered that when fibers with coatings of boron nitride are incorporated within the matrix of the present invention they have novel long-term stability at elevated temperature in air. This was particularly unexpected since boron nitride coated fibers are known to undergo oxidative degradation under such conditions. Thus, the composites of the present invention retain their properties under conditions which adversely affect the prior art composites (see eg., Example 6).

The coated fibers may be used in nearly any length and may be arranged in the matrix in nearly any manner desired. Generally, the fibers are essentially continuous and are either aligned unidirectionally, woven as a 2-dimensional fabric or shaped as a 3-dimensional reinforced preform. Such versatility in architecture is another advantage of the present composite system over prior art composites.

The matrices to be used in this invention are derived from curable preceramic polymers selected from polysiloxanes and polysilazanes. The expression "curable" is used herein to describe polymers which can be deep section infusibilized (cured) in the composite under moderate conditions by means such as mild heat, radiation, curing catalysts or curing agents. This curability is essential to the invention to inhibit the composite from delaminating during pyrolysis.

Especially preferred in the present invention are preceramic polymers having a ceramic char containing at least about 50 weight percent silicon. Although not wishing to be bound by theory, it is thought that when a composite incorporating such a preceramic polymer is heated in an oxidizing environment, the surfaces of the composite exposed to the environment form in-situ silica (SiO₂) coatings. These coatings seal the exposed surface and protect the matrix and the interfacial coating on the fiber from further oxidation when subsequently heated in an oxidizing environment. Alternatively, if other atoms which form similar sealant oxide coatings (eg., titanium, zirconium, etc.) are included in the preceramic polymer, the total weight of silicon and the other sealant oxide atoms should be greater than about 50 weight percent.

The above polymers are known in the art and can be manufactured by known techniques. Examples of suitable polysilazanes include hydridosilazanes, vinyl modified polysilazanes, silacyclobutasilazanes, vinyl modified poly(disilyl)silazanes and borosilazanes. Polymers with chars containing at least about 50 weight percent silicon (as in a preferred embodiment of the invention) can readily be determined by heating a sample of the polymer in an inert atmosphere to a temperature of about 1200°C. The resultant char is analyzed to determine the quantity of elements present and the weight percent silicon determined therefrom.

The preferred preceramic polymers of the present invention are polysilazanes and, of the polysilazanes, hydridopolysilazanes are more preferred. Such hydridopolysilazanes can be formed by techniques known in the art such as that of Cannady in U.S. Patent No. 4,540,803. This process involves contacting and reacting in an inert, essentially anhydrous atmosphere trichlorosilane with a disilazane at a temperature in the range of 25°C. to 300°C. while distilling byproduced volatile byproducts. The disilazane used in the process has the formula (R₃Si)₂NH where R is selected from the group consisting of vinyl, hydrogen, phenyl and alkyl radicals containing 1 to 3 carbon atoms.

An especially preferred embodiment of the Cannady invention involves the reaction of trichlorosilane with hexamethyldisilazane. The resultant polymer produced thereby, hydridopolysilazane (HPZ), has been shown to have valuable properties in the formation of ceramic composites.

The poly(disilyl)silazanes useful herein are manufactured by the method of Gaul in US Patent 4,340,619. This method comprises contacting and reacting in an inert, essentially anhydrous atmosphere a chlorine containing disilane or mixture of chlorine containing disilanes of the general formula (ClₐR_{b}Si)₂ with a disilazane having the general formula (R₃'Si)₂NH at a temperature in the range of 25°C. to 300°C. while distilling by-produced volatile products. R is vinyl, an alkyl group of 1-3 carbon atoms or a phenyl group; R' is vinyl, hydrogen an alkyl group of 1-3 carbon atoms or a phenyl group; a has a value of 0.5-3; b has a value of 0-2.5 and the sum of a+b equals 3.

An especially preferred embodiment of the Gaul invention involves the reaction of the disilane with hexamethyldisilazane. The resultant polymer produced thereby, methylpolydisilylazane, has been shown to have valuable properties.

The above hydridosilazane and poly(disilyl)silazane polymers may also be modified so as to add functional groups on the nitrogen atoms to allow for deep section curing of these polymers. A process for adding functional groups on such polymers is described in U.S. Patent Application No. 07/632,833, entitled "Method for Producing Functional Silazane Polymers" by Louis Mahone, assigned to the same assignee hereof and filed 01/24/90. Basically, this process comprises reacting the silazane polymer with butyllithium (BuLi) to convert the N-H bonds to N-Li and then reacting this lithium modified silazane polymer with a chlorosilane containing the functional group.

The polysilacyclobutasilazanes of the invention may be prepared by the process of Burns in U.S. Patent 4,835,238. Basically, this process comprises reacting 1,1-dichloro-1-silacyclobutane with a difunctional nucleophile selected from the group consisting of ammonia, hydrazines and diamines of the formula HRNQNRH, wherein R is as defined above and Q is a divalent hydrocarbon radical selected from alkylenes having 1-8 carbon atoms, arylenes, alkarylenes having 12 carbons or less and aralkylenes having 12 carbons or less.

The borosilazane polymers useful herein are likewise known in the art. They can be prepared, for instance, by methods such as those described in Japanese Kokai Patent No. Hei 2-84437. An especially preferred process comprises reacting a hydridopolysilazane, preferably that prepared by the reaction of trichlorsilane and hexamethyldisilazane (as set forth in the Cannady reference supra) polymer with borane. This process is described in a U.S. Patent Application entitled "Curable Boron Modified Hydropolysilazane Polymers" filed concurrently herewith by Gregg A. Zank which is assigned to the same assignee hereof. The application describes the following reaction: 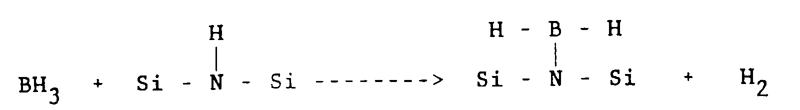 Such boron modified hydridopolysilazanes can be easily cured with the application of mild heat by the following reaction:

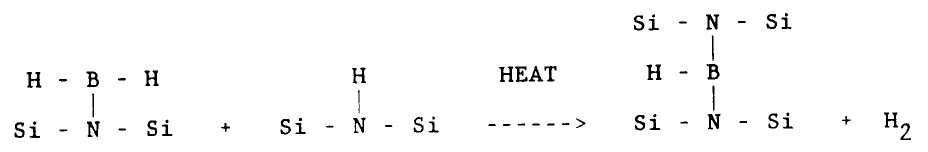

Still other polysilazanes which are useful in this invention are described in U.S. Patent No. 4,460,638.

The polysiloxanes which are functional in this invention are also known in the art and can be produced by known methods. Examples of such materials are described in U.S. Patent 4,460,640. These include, for instance, polysiloxanes with both Si-H and Si-vinyl functionality such that the materials can be crosslinked by platinum catalyzed addition reactions. Still other polysiloxanes include those with silanol (Si-OH) functionality which can be crosslinked by catalyzed or uncatalyzed silanol condensation reactions.

In addition to the above fibers and matrices, the composites of the present invention may also contain fillers. Fillers are used herein to decrease the amount of matrix shrinkage which occurs on pyrolysis so that the resultant composites have lower porosity. Suitable fillers are known in the art and can include, for example, powders, whiskers or particulates of A12O3, SiO2, other metal oxides, silicon carbide, silicon nitride, silicon hexaboride, aluminum nitride, boron nitride and the like. The preferred fillers to be used herein are boron nitride, silicon carbide, silicon nitride and aluminum nitride. Such fillers are generally included in amounts up to about 80 volume percent based on the volume of matrix material.

The composites herein can be produced by techniques known in the art. The preferred technique, however, is by the polymer infiltration process of this invention.

The composites herein are produced by polymer infiltration. This polymer infiltration process comprises first impregnating the coated fibers with a liquid preceramic mixture comprising the curable preceramic polymer and, if desired, fillers. This preceramic mixture can be formed by either a solution or melt route.

In the solution route, the curable preceramic polymer and fillers, if any, are mixed in an organic solvent. The preferred solvents are those with a low vaporization point (such as lower than about 125°C.) at atmospheric pressure to facilitate removal from the impregnated fibers and those with less than about 1 percent by weight water. Examples of suitable organic solvents include aliphatic hydrocarbons such as hexane, heptane etc. and aromatic hydrocarbons such as benzene, toluene, etc.

The concentration of the matrix precursor (curable preceramic) polymer in solution can be varied over a wide range with higher concentrations generally resulting in larger amounts of the matrix precursor impregnating the fiber. Preferably, concentrations in the range of about 30 to about 60 weight percent are employed herein.

The fibers are impregnated with the matrix precursor mixture by any convenient means. For instance, the fibers can be immersed in the mixture, sprayed with the mixture, held under a stream of the mixture, etc. The impregnated fibers can additionally be treated by a technique such as running them between rollers to uniformly distribute the matrix mixture. Following impregnation, any excess matrix mixture on the fibers is allowed to drain off.

The solvent is then allowed to evaporate by any practical method. Generally, air evaporation at room temperature is effective and preferred but alternative methods such as the use of vacuum or mild heat are also contemplated herein. The resultant fibers which have been impregnated and the solvent evaporated are commonly called a "prepreg".

As an alternative to the above solution infiltration method, a melt infiltration process could also be used. Such a melt route process comprises heating the preceramic polymer above its melting point (yet below the cure temperature) in an inert environment, mixing the molten polymer with fillers, if used, and then impregnating the fiber with the molten polymer mixture. For instance, the fibers can be immersed in the mixture, sprayed with the mixture, held under a stream of the mixture, etc. The impregnated fibers can additionally be manipulated to uniformly distribute the matrix mixture in the fibers. Following impregnation, any excess matrix mixture on the fibers is allowed to drain off. Cooling such impregnated fibers also results in a "pre-preg". Additionally, however, melt impregnated fibers. may be formed prior to cooling by a process such as filament winding or pulltrusion. When the formed fibers are cooled, they can be immediately cured and fired as set forth below.

The prepreg may, optionally, be partially cured so that it will hold the shape imparted in a subsequent step. This partial curing, also called "B-staging", is generally accomplished by heating in air at a temperature in the range of about 50 to about 150°C. for about 2 minutes to about 4 hours. Generally, heating at about 100°C. for 10 to 15 minutes is sufficient. This heating may be conducted by any appropriate means, but the use of an air convection oven or similar equipment is usually sufficient. Care should be taken during this curing step to avoid temperature and time combinations which result in excessive curing such that flowability of the resin in the later molding or pressing steps is significantly reduced.

The prepreg is then subjected to externally applied pressure while heating to form the composite into the desired shape and cause uniformity of resin about the fibers. Generally, this is accomplished by pressing the prepreg into a mold at a temperature and pressure which allows the resin to flow throughout the mold. The pressing conditions generally used therein include temperatures in the range of about 60 to about 300°C., pressures in the range of about 6.89 to 17236.9 kPa (1 to 2500 pounds per square inch) and times in the range of about 2 minutes to about 6 hours. Pressing at about 175°C., 1379.0 to 2757.9 kPa (200-400 psi) and 30 to 180 minutes generally provides satisfactory results. Temperatures and pressures which result in resin being forced out of the mold should be avoided.

It should be noted that if a 3-dimensional shape is desired, the above steps are often altered. To manufacture 3-D objects by the polymer infiltration process, one generally forms the fiber into the desired shape and then impregnates the formed fiber with the polymer mixture. The impregnated fibers are then pressed (as above), cured and fired (as set forth below).

The pressed prepreg is then cured to insure complete or nearly complete crosslinking such that deformation on pyrolysis will not occur. Any schedule which produces the desired result may be used so long as the temperature does not cause ceramification. A preferred schedule comprises heating at less than 5°C./minute to 285°C. and then holding for 16 hours. This curing step may be performed in the mold under pressure or it may be accomplished in a conventional oven under nitrogen without any applied pressure.

The pressed and cured product (green composite or molded part) is then slowly fired in a furnace to a temperature of at least 1000°C. in an inert atmosphere or vacuum until the product ceramifies. It is preferred that the green composite be fired at a temperature of about 1200°C. By slow firing it is meant that the composites are heated in a slow (eg., 2°C./min.), stepwise or linear fashion until the majority of any higher boiling volatiles present escape the composite after which time the temperature can be quickly raised to the ultimate firing temperature. For example, the temperature for most composites should be raised to about 300°C. and the heating slowly continued until a temperature of about 800°C. is reached after which the temperature can be raised rather quickly to the ultimate firing temperature.

After completion of the firing process the composite is cooled. At least the initial cooling should also be under an inert atmosphere. When cooled, the resulting material is a uniform, hard, strong fiber reinforced composite. The volume percentage of fibers in the resulting composite can vary over a wide range depending on the desired use. Generally, it is preferred that about 10 to 65 volume percent of the composite is fiber.

The composites formed by the above process are generally quite porous. Since it may be preferred to produce dense objects (which have higher strength), it is within the scope of this invention to reimpregnate the composites formed above. This is accomplished by merely impregnating the composite with the matrix precursor mixture (without fillers) in the same manner as the original fibers, drying and curing the reimpregnated composite and then firing. This "reimpregnation" can be repeated until products with the desired density and strength are achieved. Alternatively, the composite can be reimpregnated by a melt process as described above and set forth in the Examples.

Even though the polymer impregnation process is described above, any alternative method which produces the desired ceramic matrix composites can also be used. These could include, for instance, processes such as resin transfer molding.

The composites herein have many desirable properties such as good oxidation resistance at high temperatures, high strength and toughness and a wide range of dielectric properties. For instance, the four-point flexural strength of the composites measured at room temperature and at temperatures up to 1100°C. in air generally exceed 30 ksi and often exceed 344.7 MPa (50 ksi). Similarly, the tangent modulus of these compositions often exceed 68.9 x 10³ MPa (10 Msi).

The following non-limiting examples are provided so that one skilled in the art might better understand the invention.

### Example 1 (comparative)

A mixture of 75 g (80% by weight of the matrix precursor) vinyl-modified hydridopolysilazane (as made by Example 1 of US Patent Application No. 07/632,833), 18.75 g (20% by weight of the matrix precursor) boron nitride powder (less than 1 micron in size with a purity of 99.5%, obtained from Cerac, Inc.), 93.75 g toluene and 50 g of 5 mM diameter silicon nitride grinding media were added to a plastic jar. The jar was placed on a jar roll mill and permitted to mix for 16 hours. The silicon nitride grinding media was then filtered from the slurry.

A 33 cm X 50 cm cloth of uncoated Ceramic Grade NICALON Fiber in the form of a 0°/90° balanced 8 harness satin weave was coated with the slurry formed above. The coated cloth was then pulled through a set of aluminum rolls 3 times to evenly distribute the slurry on the cloth. The coated cloth was then placed in a chemical hood at room temperature for 20 minutes to evaporate the toluene solvent and leave a slightly tacky prepreg. After drying the prepreg cloth weighed 76.78 g.

The prepreg was cut into 12 - 10 cm X 10 cm sections and stacked with the warp direction of the weave as 0° to make a 12 ply laminate composite. This composite was placed in a standard vacuum bag which consisted of a 30 cm X 50 cm aluminum plate, one layer of peel ply, the 12 ply prepreg, another peel ply, a second 15 cm X 15 cm aluminum plate and a sheet of Vac-Pac UHT-650-XT bonded to the aluminum plate with a high temperature tape (Schnee-Morehead 5158). A Vacuum port was introduced through the Vac-Pac sheet.

Actual molding of the composite was done by inserting the evacuated vacuum bag assembly into a 120°C pre-heated molding press. A pressure of 1379.0 kPa (200 psi) was applied after 5 minutes and the composite was held under these conditions for 30 minutes. The temperature of the press was then increased to 180°C. for 1 hour and then to 260°C. for 2 hours while maintaining 1379.0 kPa (200 psi). The system was permitted to cool to room temperature and the composite was removed from the bag.

The molded prepreg was flat and well formed. The excess matrix precursor which had flowed to the edge of the molded prepreg was removed and the molded prepreg was post cured in nitrogen at 285°C. for 20 hours. The resultant cured composite weighed 60.37 g and was 57.6 % by volume fiber.

The cured composite was pyrolyzed in nitrogen at 1°C./minute from room temperature to 1000°C., held at 1000°C. for 1 hour, the temperature was increased to 1200°C. at 3.33°C./minute and held at temperature for 1 hour. The power to the furnace was then turned off and the furnace was allowed to cool to 50°C. under flowing nitrogen. The resultant composite weighed 58.67 g and had an open porosity of 25.9 % by a liquid immersion test.

The composite was reimpregnated with a 30% by weight solution of the above vinyl modified hydridopolysilazane polymer in toluene. This was accomplished by placing the composite in an evacuated chamber, allowing the polymer solution to flow into the chamber to a level above the composite, opening the chamber to the atmosphere and allowing the composite to soak in the solution for 30 minutes. The composite was removed from the solution and the toluene was allowed to evaporate in a hood for 1 hour. The composite was then placed in an oven with a nitrogen purge and was heated to 285°C. for 2 hours to cure the polymer. The above solution impregnation was repeated and the composite reheated under nitrogen to 285°C. for 2 hours. The reimpregnated composite was then pyrolyzed to 1200°C. in the same manner as above.

The above reimpregnation-pyrolysis procedure was then repeated 9 more times. The resultant composite had a bulk density of 2.21 g/cm³ and an open porosity of 2.4%. The composite was cut into flexural test bars and tested at room temperature. The test bars failed in a brittle fracture. The results of the tests are presented in Table 1.

### Example 2

A prepreg cloth comprising boron nitride-coated Nicalon fiber (0.3 to 0.5 micrometer coating of boron nitride applied on HVR Grade Nicalon) in vinyl-modified hydridopolysilazane was prepared in the same manner as Example 1 (46.7% by weight matrix precursor) and was formed, molded and cured in the same manner as Example 1 except 2757.9 kPa (400 psi) pressure was used in the molding. The molded prepreg was post-cured at 285°C under nitrogen for 20 hours. The resultant cured composite weighed 57.36 g and contained 55.2 % by volume fiber. The cured composite was pyrolyzed in the same manner as Example 1 which resulted in a ceramic composite with a bulk density of 1.94 g/cm³ and open porosity of 19.4 %. The composite was reimpregnated as in Example 1 a total of 9 times to reach a bulk density of 2.21 g/cm³ and open porosity of 6.5%. The composite was not brittle and it had the properties listed in Table 1.

### Example 3

A prepreg cloth comprising boron nitride-coated Nicalon fiber (0.3 to 0.5 micrometer coating of boron nitride applied on HVR Grade Nicalon) in silacyclobutasilazane polymer (prepared by the method of US Patent No. 4,835,238) was prepared in the same manner as Example 1 (47.8% by weight matrix precursor) and was cut into 6 - 14 cm X 14 cm pieces to make a 6 ply composite. The composite was molded in the same manner as Example 1 except that the pre-heated press was at 220°C and the pressure was 2757.9 kPa (400 psi). The press was held at 220°C for 1 hour then the temperature was increased to 260°C for 2 hours. The system was permitted to cool to room temperature and the molded prepreg was post cured in nitrogen at 285°C for 20 hours. A cured composite was prepared which weighed 76.43 g and was 35.1 % by volume fiber. The cured composite was pyrolyzed in the same manner as Example 1 which resulted in a ceramic composite with a bulk density of 1.74 g/cm³ and open porosity of 22.2 %. The composite was reimpregnated as in Example 1 with a 30% by weight solution of vinyl-modified hydridosilazane polymer a total of 7 times to reach a bulk density of 2.13 g/cm³ and open porosity of 6.8%. The composite was not brittle and it had the properties listed in Table 1.

### Example 4

A prepreg cloth comprising boron nitride-coated Nicalon fiber (0.3 to 0.5 micrometer coating of boron nitride applied on HVR Grade Nicalon) in boron-modified hydridopolysilazane polymer was prepared in the same manner as Example 1 (34.8 % by weight matrix precursor) and was cut into 6 - 15 cm X 15 cm pieces to make a 6 ply laminate. (The boron-modified hydridopolysilazane polymer was prepared by slowly adding a solution comprising BH₃-tetrahydrofuran in tetrahydrofuran to a solution comprising the hydridopolysilazane polymer of US Patent No. 4,540,803 in toluene). The composite was molded in the same manner as Example 1 except that the pre-heated press was at 60°C. and 689.5 kPa (100 psi) for 30 minutes, 123°C. and 689.5 kPa (100 psi) for 1 hour, 225°C. and 689.5 kPa (100 psi) for 1 hour, 260°C. and 689.5 kPa (100 psi) for 1 hour and 350°C. and 689.5 kPa (100 psi) for 1 hour. The system was permitted to cool to room temperature under a pressure of 689.5 kPa (100 psi). The resultant cured composite weighed 74.0 g with a thickness of 0.188 cm (0.074 inches) and was 55 % by volume fiber. The cured composite was pyrolyzed in the same manner as Example 1.

The composite was densified by a melt-impregnation-pyrolysis method which comprised measuring the open porosity of the composite followed by dipping the composite into a solution of the boron modified hydridopolysilazane polymer or painting a solution of the polymer onto the composite until enough polymer is added to fill the porosity. The polymer coated composite was then vacuum bagged and heated under vacuum by inserting the assembly into a 177°C. oven, holding for 1 hour, then heating to 260°C. The resultant composite was pyrolyzed as in Example 1 and the melt impregnation-pyrolysis cycle repeated 3 times to yield a composite with 12 % open porosity. This composite was reimpregnated and pyrolyzed as in Example 1 by the solution method to yield a product with a bulk density of 2.15 g/cm³ and open porosity of 6.5%. The composite was not brittle and it had the properties listed in Table 1.

### Example 5

A prepreg cloth comprising boron nitride-coated Nicalon fiber (0.3 to 0.5 micrometer coating of boron nitride applied on HVR Grade Nicalon) in boron-modified hydridopolysilazane polymer (prepared in the same manner as Example 4) (75% by weight of matrix) and beta silicon carbide powder (from Ibiden Co., Ltd.) (25% by weight of matrix) was prepared in the same manner as Example 1 (42.9% by weight matrix precursor) and was cut into 6 - 10 cm X 7 cm pieces to make a 6 ply laminate. The laminate was molded in the same manner as Example 4. The resultant cured composite weighed 46.8 g with a thickness of 0.170 cm (0.067 inches) and was 58% by volume fiber. The cured composite was pyrolyzed and densified by the method of Example 4. The resultant composite had a bulk density of 2.2 g/cm³ and open porosity of 7.3%. The composite was not brittle and it had the properties listed in Table 1.

### Example 6

A prepreg cloth comprising boron nitride-coated HPZ fiber (0.3 to 0.5 micrometer coating of boron nitride applied on HVR Grade Nicalon) in silacyclobutasilazane polymer (prepared by the method of US Patent No. 4,835,238) was prepared in the same manner as Example 1 (45.6% by weight matrix precursor) and was cut into 6 - 7.6 cm X 10 cm pieces to make a 6 ply composite. The composite was molded and cured in the same manner as Example 3 to prepare a molded composite which weighed 17.7 g, had a thickness of 0.066 inches and was 35% by volume fiber. The molded composite was pyrolyzed and densified in the same manner as Example 3 which resulted in a ceramic composite with a bulk density of 2.08 g/cm³ and open porosity of 6.4%. The composite was not brittle and it had the properties listed in Table 1.

### Example 7

A prepreg cloth comprising boron nitride-coated Nicalon fiber (0.3 to 0.5 micrometer coating of boron nitride applied on HVR Grade Nicalon) in boron-modified hydridopolysilazane polymer (prepared in the same manner as Example 4) (65% by weight of matrix), beta silicon carbide powder (from Ibiden Co., Ltd.) (25% by weight of matrix) and boron nitride powder (10% by weight of matrix) was prepared in the same manner as Example 1 (43.4% by weight matrix precursor) and was cut into 6 - 15 cm X 15 cm pieces to make a 6 ply laminate. The laminate was molded in the same manner as Example 4. The resultant cured composite had a thickness of 0.216 cm (0.085 inches) and was 44% by volume fiber. The cured composite was pyrolyzed and densified by the method of Example 4. The resultant composite had a bulk density of 2.09 g/cm³ and open porosity of 7.7%. The composite was not brittle and it had the properties listed in Table 1.

### Example 8

A prepreg cloth comprising boron nitride-coated Nicalon fiber (0.3 to 0.5 micrometer coating of boron nitride applied on HVR Grade Nicalon) in boron-modified hydridopolysilazane polymer (prepared in the same manner as Example 4) (75% by weight of matrix) and aluminum nitride powder (25% by weight of matrix) was prepared, molded, cured, pyrolyzed and densified by the method of Example 4. The composite was not brittle and it had the properties listed in Table 1.

### Example 9

A prepreg cloth comprising boron nitride-coated Nicalon fiber (0.3 to 0.5 micrometer coating of boron nitride applied on HVR Grade Nicalon) in boron-modified hydridopolysilazane polymer (prepared in the same manner as Example 4) (75% by weight of matrix) and silicon nitride powder (25% by weight of matrix) was prepared, molded, cured, pyrolyzed and densified by the method of Example 4. The composite was not brittle and it had the properties listed in Table 1.

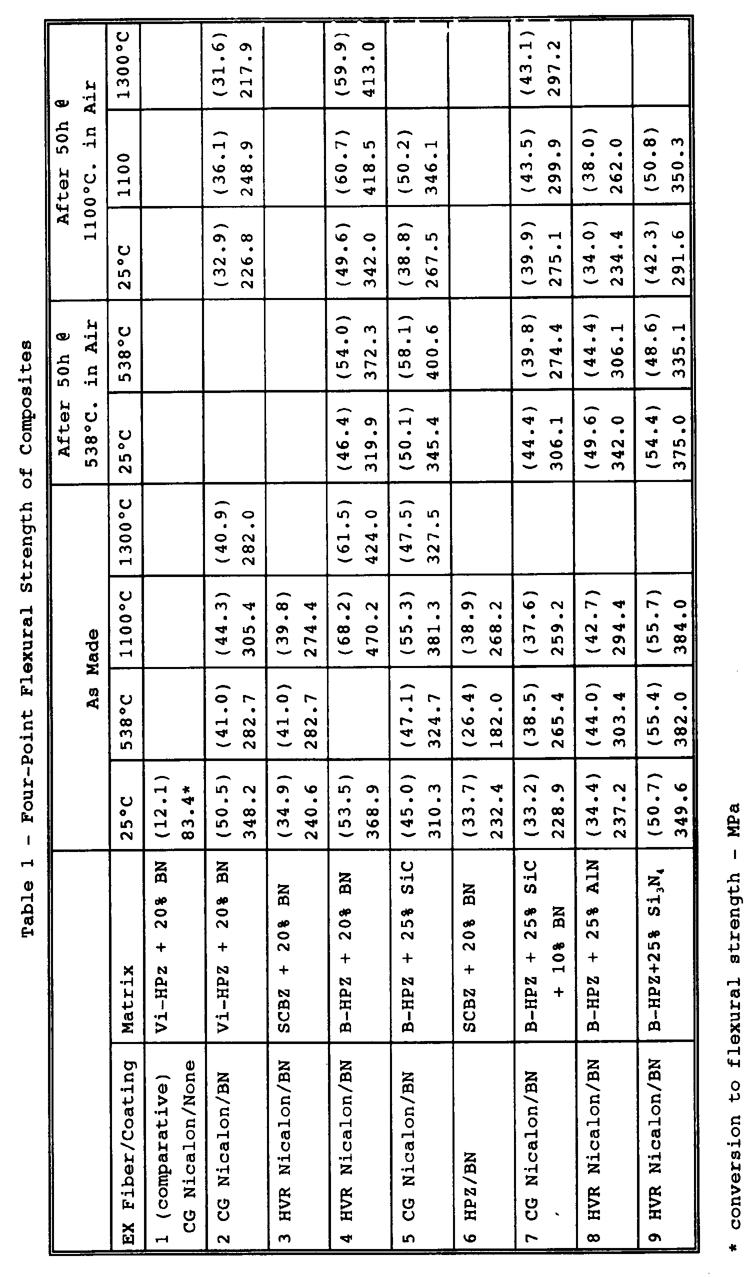

## Claims

1. An oxidation resistant ceramic fiber composite comprising refractory fibers embedded in a ceramic matrix wherein the ceramic matrix is a cured and ceramified silicon-containing polymer material selected from polysiloxanes and polysilazanes, said polymer material optionally containing atoms other than silicon selected from titanium and zirconium and wherein said refractory fibers are coated with boron nitride.

2. A ceramic fibre composite according to claim 1, wherein the silicon-containing polymer material is a polysilazane which is selected from hydridopolysilazanes, silacyclobutasilazanes, boron-modified hydridopolysilazanes and vinyl-modified hydridopolysilazanes.

3. A ceramic fibre composite according to claim 1 or claim 2, wherein the refractory fiber material is a silicon-containing fiber material.

4. A ceramic fibre composite according to claim 3, wherein the silicon-containing fibre comprises silicon, carbon and oxygen.

5. A ceramic fibre composite according to Claim 4, wherein the silicon-containing fibre is a silicon oxycarbide fibre.

6. A ceramic fibre composite according to Claim 3, wherein the silicon-containing fibre comprises silicon, carbon, oxygen and nitrogen.

7. A ceramic fibre composite according to Claim 6, wherein the silicon-containing fibre is a silicon oxcarbonitride fibre derived from an hydridopolysilazane polymer.

8. A ceramic fibre composite according to any of Claims 1-7, wherein from 10 to 65 volume % of the composite is fibre.

9. A ceramic fibre composite according to any of Claims 1-8, wherein the composite additionally comprises a filler selected from boron nitride, silicon carbide, silicon nitride, silicon hexaboride, boron carbide, titanium boride, boron, titanium carbide and aluminum nitride.

10. A ceramic fibre composite according to Claim 1, comprising a cured and ceramified boron-modified hydridopolysilazane polymer together with a filler and, within the ceramic matrix, a silicon-containing refractory fibre having a coating comprising boron nitride.

11. A pre-preg for a ceramic fibre composite as defined in any of Claims 1-10, wherein said pre-preg comprises boron nitride coated refractory fibres impregnated by said silicon-containing polymer material selected from polysiloxanes and polysilazanes, in its precured preceramic state.

12. A green fibre-reinforced preceramic composite for obtaining a ceramic fibre composite as defined in any of Claims 1-10, wherein said preceramic composite comprises boron nitride coated refractory fibres embedded in said silicon-containing polymer material selected from polysiloxanes and polysilazanes, in the cured but preceramic state.

13. A method of forming a ceramic fibre composite as defined in Claim 1, comprising coated refractory fibres embedded in a ceramic matrix, wherein
(i) said fibres coated with boron nitride are impregnated with a curable preceramic silicon-containing polymer material selected from polysiloxanes and polysilazanes to form a curable preceramic matrix mixture of said fibres and said polymer material, said polymer material optionally containing other atoms than silicon selected from titanium and zirconium;
(ii) the resulting pre-preg mixture of fibres impregnated with said polymer material is formed into a desired shape;
(iii) the shaped pre-preg mixture is cured under temperature conditions resulting in cross-linking of said polymer material without ceramification thereof; and
(iv) the pressed and cured pre-preg mixture is heated to ceramification at a temperature of at least 1,000°C in an inert atmosphere or a vacuum.

14. A method according to Claim 13, wherein the pre-preg mixture resulting from step (i) in which the fibres are impregnated with said polymer material is subjected to partial curing prior to being subjected to step (ii) in which the pre-preg mixture is shaped.

15. A method according to Claim 13 or Claim 14, in which the ceramified composite resulting from step (iv) is reimpregnated one or more times with the matrix precursor mixture, without any fillers, and the resulting reimpregnated composite is then dried, cured and ceramified.

16. A method according to any of claims 13 to 15, wherein the curable silicon-containing preceramic polymer material is a polysilazane polymer selected from hydridopolysilazanes, silacyclobutasilazanes, boron-modified hydropolysilazanes and vinyl-modified hydridopolysilazanes.

17. A method according to any of Claims 13 to 16, wherein the refractory fibre material is derived from an hydridopolysilazane polymer.

18. A method according to any of Claims 13 to 16, wherein the preceramic matrix mixture comprises a curable boron modified hydropolysilazane polymer and a filler, and, embedded within the preceramic matrix mixture, silicon-containing refractory fibres having a coating comprising boron nitride.

19. A method according to Claim 18, wherein the refractory fibre material is a silicon oxycarbide fibre.

20. A method according to Claim 18, wherein the silicon-containing refractory fibre material is a silicon oxycarbonitride fibre derived from an hydridopolysilazane polymer.

## Patentansprüche

1. Oxidationsbeständiger keramischer Faserverbundstoff, enthaltend hitzebeständige Fasern, die in eine keramische Matrix eingebettet sind, wobei die keramische Matrix ein gehärtetes und keramifiziertes siliciumhaltiges Polymermaterial ist, ausgewählt aus Polysiloxanen und Polysilazanen, wobei dieses Polymermaterial wahlweise Atome enthält, die sich von Silicium unterscheiden und aus Titan und Zirkon ausgewählt sind, und wobei diese hitzebeständigen Fasern mit Bornitrid beschichtet sind.

2. Keramischer Faserverbundstoff nach Anspruch 1, wobei das siliciumhaltige Polymermaterial ein Polysilazan ist, das ausgewählt ist aus Hydridopolysilazanen, Silacyclobutasilazanen, bormodifizierten Hydridopolysilazanen und vinylmodifizierten Hydridopolysilazanen.

3. Keramischer Faserverbundstoff nach Anspruch 1 oder Anspruch 2, wobei das hitzebeständige Fasermaterial ein siliciumhaltiges Fasermaterial ist.

4. Keramischer Faserverbundstoff nach Anspruch 3, wobei die siliciumhaltige Faser Silicium, Kohlenstoff und Sauerstoff enthält.

5. Keramischer Faserverbundstoff nach Anspruch 4, wobei die siliciumhaltige Faser eine Siliciumoxycarbidfaser ist.

6. Keramischer Faserverbundstoff nach Anspruch 3, wobei die siliciumhaltige Faser Silicium, Kohlenstoff, Sauerstoff und Stickstoff enthält.

7. Keramischer Faserverbundstoff nach Anspruch 6, wobei die siliciumhaltige Faser eine Siliciumoxycarbonitridfaser ist, die sich von einem Hydridopolysilazanpolymer ableitet.

8. Keramischer Faserverbundstoff nach einem der Ansprüche 1 bis 7, wobei die Faser 10 bis 65 Vol.-% des Verbundstoffs ausmacht.

9. Keramischer Faserverbundstoff nach einem der Ansprüche 1 bis 8, wobei der Verbundstoff zusätzlich einen Füllstoff, ausgewählt aus Bornitrid, Siliciumcarbid, Siliciumnitrid, Siliciumhexaborid, Borcarbid, Titanborid, Bor, Titancarbid und Aluminiumnitrid, enthält.

10. Keramischer Faserverbundstoff nach Anspruch 1, enthaltend ein gehärtetes und keramifiziertes bormodifziertes Hydridopolysilazanpolymer zusammen mit einem Füllstoff und innerhalb der keramischen Matrix eine siliciumhaltige hitzebeständige Faser mit einer Beschichtung, die Bornitrid enthält.

11. Pre-preg für einen keramischen Faserverbundstoff wie in einem der Ansprüche 1 bis 10 definiert, wobei dieser Pre-preg bornitridbeschichtete hitzebeständige Fasern enthält, die mit diesem siliciumhaltigen Polymermaterial, ausgewählt aus Polysiloxanen und Polysilazanen, imprägniert sind, in seinem vorgehärteten vorkeramischen Zustand.

12. Faserverstärkter vorkeramischer Verbundstoffgrünkörper, um einen keramischen Faserverbundstoff wie in einem der Ansprüche 1 bis 10 definiert zu erhalten, wobei dieser vorkeramische Verbundstoff bornitridbeschichtete hitzebeständige Fasern enthält, die in diesem siliciumhaltigen Polymermaterial, das aus Polysiloxanen und Polysilazanen ausgewählt ist, eingebettet sind, in dem gehärteten aber vorkeramischen Zustand.

13. Verfahren zur Ausbildung eines keramischen Faserverbundstoffs wie in Anspruch 1 definiert, enthaltend beschichtete hitzebeständige Fasern, die in eine keramische Matrix eingebettet sind, wobei
(i) diese mit Bornitrid beschichteten Fasern mit einem härtbaren vorkeramischen siliciumhaltigen Polymermaterial, ausgewählt aus Polysiloxanen und Polysilazanen, imprägniert werden, um eine härtbare vorkeramische Matrixmischung von diesen Fasern und diesem Polymermaterial auszubilden, wobei dieses Polymermaterial wahlweise Atome enthält, die sich von Silicium unterscheiden und aus Titan und Zirkon ausgewählt sind,
(ii) die resultierende Pre-preg-Mischung aus Fasern, die mit diesem Polymermaterial imprägniert sind, zu einer gewünschten Form geformt wird,
(iii) die geformte Pre-preg-Mischung unter Temperaturbedingungen, die zu einer Vernetzung dieses Polymermaterials ohne dessen Keramifizierung führen, gehärtet wird und
(iv) die gepreßte und gehärtete Pre-preg-Mischung zur Keramifizierung auf eine Temperatur von wenigstens 1.000°C in einer inerten Atmosphäre oder im Vakuum erwärmt wird.

14. Verfahren nach Anspruch 13, wobei die Pre-preg-Mischung, die aus Schritt (i) resultiert, in dem die Fasern mit diesem Polymermaterial imprägniert werden, bevor sie Schritt (ii) unterzogen werden, in dem die Pre-preg-Mischung geformt wird, einer teilweisen Härtung unterzogen wird.

15. Verfahren nach Anspruch 13 oder Anspruch 14, bei dem der keramifizierte Verbundstoff, der aus Schritt (iv) resultiert, ein oder mehrere Male mit der Matrixvorläufermischung ohne jegliche Füllstoffe reimprägniert wird und der resultierende reimprägnierte Verbundstoff dann getrocknet, gehärtet und keramifiziert wird.

16. Verfahren nach einem der Ansprüche 13 bis 15, wobei das härtbare siliciumhaltige vorkeramische Polymermaterial ein Polysilazanpolymer, ausgewählt aus Hydridopolysilazanen, Silylcyclobutasilazanen, bormodifizierten Hydridopolysilazanen und vinylmodifizierten Hydridopolysilazanen ist.

17. Verfahren nach einem der Ansprüche 13 bis 16, wobei das hitzebeständige Fasermaterial sich von einem Hydridopolysilazanpolymer ableitet.

18. Verfahren nach einem der Ansprüche 13 bis 16, wobei die vorkeramische Matrixmischung ein härtbares bormodifiziertes Hydridopolysilazanpolymer und einen Füllstoff und siliciumhaltige hitzebeständige Fasern, die mit einer borhaltigen Beschichtung beschichtet sind und in der vorkeramischen Matrixmischung eingebettet sind, enthält.

19. Verfahren nach Anspruch 18, wobei das hitzebeständige Fasermaterial eine Siliciumoxycarbidfaser ist.

20. Verfahren nach Anspruch 18, wobei das siliciumhaltige hitzebeständige Fasermaterial eine Siliciumoxycarbonitridfaser ist, die sich von einem Hydridopolysilazanpolymer ableitet.

## Revendications

1. Un composite de fibres et céramique résistant à l'oxydation, comprenant des fibres réfractaires noyées dans une matrice céramique, dans lequel la matrice céramique est une matière polymère siliciée durcie et convertie en céramique choisie parmi les polysiloxanes et les polysilazanes, ladite matière polymère contenant facultativement des atomes autres que du silicium choisis parmi le titane et le zirconium, et lesdites fibres réfractaires sont revêtues de nitrure de bore.

2. Un composite de fibres et céramique selon la revendication 1, dans lequel la matière polymère siliciée est un polysilazane qui est choisi parmi les hydruropolysilazanes, les silacyclobutasilazanes, les hydropolysilazanes modifiés par du bore et les hydruropolysilazanes modifiés par des groupes vinyle.

3. Un composite de fibres et céramique selon la revendication 1 ou la revendication 2, dans lequel la matière de fibres réfractaires est une matière de fibre siliciée.

4. Un composite de fibres et céramique selon la revendication 3, dans lequel la fibre siliciée comprend du silicium, du carbone et de l'oxygène.

5. Un composite de fibres et céramique selon la revendication 4, dans lequel la fibre siliciée est une fibre d'oxycarbure de silicium.

6. Un composite de fibres et céramique selon la revendication 3, dans lequel la fibre siliciée comprend du silicium, du carbone, de l'oxygène et de l'azote.

7. Un composite de fibres et céramique selon la revendication 6, dans lequel la fibre siliciée est une fibre d'oxycarbonitrure de silicium dérivée d'un polymère hydruropolysilazane.

8. Un composite de fibres et céramique selon l'une quelconque des revendications 1 à 7, dans lequel les fibres constituent 10 à 65 % en volume du composite.

9. Un composite de fibres et céramique selon l'une quelconque des revendications 1 à 8, dans lequel le composite comprend, de plus, une charge choisie parmi le nitrure de bore, le carbure de silicium, le nitrure de silicium, l'hexaborure de silicium, le carbure de bore, le borure de titane, le bore, le carbure de titane et le nitrure d' aluminium.

10. Un composite de fibres et céramique selon la revendication 1, comprenant un polymère hydropolysilazane modifié par du bore, durci et converti en céramique, ainsi qu'une charge, et, au sein de la matrice céramique, une fibre réfractaire siliciée portant un revêtement comprenant du nitrure de bore.

11. Un pré-imprégné pour un composite de fibres et céramique tel que défini dans l'une quelconque des revendications 1 à 10, dans lequel ledit pré-imprégné comprend des fibres réfractaires revêtues de nitrure de bore, imprégnées par ladite matière polymère siliciée choisie parmi les polysiloxanes et les polysilazanes, dans son état précéramique pré-durci.

12. Un composite précéramique renforcé par des fibres à l'état cru pour la formation d'un composite de fibres et céramique tel que défini dans l'une quelconque des revendications 1 à 10, dans lequel ledit composite précéramique comprend des fibres réfractaires revêtues de nitrure de bore noyées dans la matière polymère siliciée choisie parmi les polysiloxanes et les polysilazanes, à l'état durci mais précéramique.

13. Un procédé de formation d'un composite de fibres et céramique tel que défini dans la revendication 1, comprenant des fibres réfractaires revêtues noyées dans une matrice céramique, dans lequel
(i) lesdites fibres revêtues de nitrure de bore sont imprégnées avec une matière polymère siliciée précéramique durcissable choisie parmi les polysiloxanes et les polysilazanes pour former un mélange de matrice précéramique durcissable constitué desdites fibres et de ladite matière polymère, ladite matière polymère contenant facultativement d'autres atomes que de silicium choisis parmi le titane et le zirconium ;
(ii) le mélange pré-imprégné résultant de fibres imprégnées de ladite matière polymère est façonné en une forme souhaitée ;
(iii) le mélange pré-imprégné façonné est durci dans des conditions de températures provoquant la réticulation de ladite matière polymère sans la convertir en céramique ; et
(iv) le mélange pré-imprégné pressé et durci est chauffé jusqu'à conversion en céramique à une température d'au moins 1000°C dans une atmosphère inerte ou sous vide.

14. Un procédé selon la revendication 13, dans lequel le mélange pré-imprégné résultant de l'étape (i) dans laquelle les fibres sont imprégnées avec ladite matière polymère est soumis à un durcissement partiel avant d'être soumis à l'étape (ii) dans laquelle le mélange pré-imprégné est façonné.

15. Un procédé selon la revendication 13 ou la revendication 14, dans lequel le composite converti en céramique résultant de l'étape (iv) est à nouveau imprégné une ou plusieurs fois avec le mélange précurseur de matrice, sans charges, et le composite à nouveau imprégné résultant est ensuite séché, durci et converti en céramique.

16. Un procédé selon l'une quelconque des revendications 13 à 15, dans lequel la matière polymère siliciée précéramique durcissable est un polymère polysilazane choisi parmi les hydruropolysilazanes, les silylcyclobutasilazanes, les hydropolysilazanes modifiés par du bore et les hydruropolysilazanes modifiés par des groupes vinyle.

17. Un procédé selon l'une quelconque des revendications 13 à 16, dans lequel la matière de fibres réfractaires est dérivée d'un polymère hydruropolysilazane.

18. Un procédé selon l'une quelconque des revendications 13 à 16, dans lequel le mélange de matrice précéramique comprend un polymère hydropolysilazane durcissable modifié par du bore et une charge et, noyées dans le mélange de matrice précéramique, des fibres réfractaires siliciées portant un revêtement comprenant du nitrure de bore.

19. Un procédé selon la revendication 18, dans lequel la matière de fibres réfractaires est une fibre d'oxycarbure de silicium.

20. Un procédé selon la revendication 18, dans lequel la matière de fibres réfractaires siliciées est une fibre d'oxycarbonitrure de silicium dérivée d'un polymère hydruropolysilazane.
